# EUROPÄISCHE PATENTSCHRIFT

(11) **EP 0 984 884 B1**
(45) Veröffentlichungstag und Bekanntmachung des Hinweises auf die Patenterteilung: **31.10.2001**
(21) Anmeldenummer: 98921330.1
(22) Anmeldetag: 04.06.1998
(51) Int. Cl.: B62M 7/12, B62M 23/02

(54) **HYBRID-ANTRIEB FÜR EIN MUSKELKRAFTGETRIEBENES FAHRZEUG MIT ELEKTRISCHEM HILFSMOTOR**
HYBRID DRIVE MECHANISM FOR A VEHICLE DRIVEN BY MUSCLE POWER, WITH AN AUXILIARY ELECTRIC MOTOR
SYSTEME D'ENTRAINEMENT HYBRIDE POUR VEHICULE A PROPULSION MUSCULAIRE, EQUIPE D'UN MOTEUR AUXILIAIRE ELECTRIQUE

(30) Priorität: 06.06.1997 CH 137697
(43) Veröffentlichungstag der Anmeldung: 15.03.2000
(73) Patentinhaber: KUTTER, Michael, CH-4058 Basel (CH)
(72) Erfinder: KUTTER, Michael, CH-4058 Basel (CH)
(74) Vertreter: Patentanwälte Feldmann & Partner AG
(86) Internationale Anmeldenummer: CH9800241
(87) Internationale Veröffentlichungsnummer: WO9855353

(56) Entgegenhaltungen:
- EP-A- 0 706 909
- WO-A-96/25320
- DE-A- 3 525 059
- FR-A- 2 264 676

## Beschreibung

Die vorliegende Erfindung betrifft einen Hybrid-Antrieb gemass Oberbegriff des Patentanspruches 1.

Elektrische Hilfsantriebe für durch den Fahrer angetriebene Fahrzeuge, wie Fahrrader, Dreirader und Rollstuhle, sind seit längerer Zeit bekannt.
Gemeinsam ist all diesen bekannten Fahrzeugen ein Antrieb durch den Hilfsmotor, wobei dieser parallel zur Muskelkraft des Fahrers das, bzw. die angetriebenen Rader treibt. D.h. dass letztlich beide Antriebsquellen parallel als Abtrieb wirken, so dass deren Antriebsmomente addiert werden.

Die beiden Antriebsquellen Elektromotor und Muskelkraft wirken demzufolge auf das gleiche Antriebsrad. Die beiden Antriebsquellen sind folglich drehzahlmässig gekoppelt.

Eine Erhöhung der Drehzahl der einen Antriebsquelle hat nicht zwingend eine wesentliche Erhöhung der Fahrgeschwindigkeit zur Folge. Hingegen wird dadurch die andere Antriebsquelle entlastet, bis schliesslich deren Leistungsabgabe auf Null absinkt.

Durch Verwendung von Freiläufen Ueberholkupplungen und dergleichen kann diesem Umstand vordergründig Abhilfe geschaffen werden.
Dadurch wird es möglich z.B. auf einem Fahrrad mit elektrischem Hilfsantrieb durch Einsatz der Muskelkraft höhere Geschwindigkeiten als die durch die Maximaldrehzahl des Motors bedingte Geschwindigkeit zu fahren, ohne dass der Elektromotor dabei bremsend wirkt. Es liegt jedoch in der Natur des Freilaufes bzw. der Ueberholkupplung, dass dabei der Elektromotor keine Antriebsleistung zur Fortbewegung mehr beitragt.

Ein erhöhter Einsatz der Muskelkraft des Fahrers bewirkt daher keine wesentliche Erhöhung der Fahrgeschwindigkeit, sondern vielmehr lediglich eine Entlastung des Elektromotors. Dies hinterlasst bei bewegungsfreudigen Fahrern meist ein unbefriedigendes Gefühl, sind sich doch diese gewohnt, selbst auf einem unmotorisierten Fahrrad durch erhohten Muskelkraft-Einsatz eine Erhöhung der Fahrgeschwindigkeit zu erfahren.

Das häufige Schalten ist fur die meisten Radfahrer ein unangenehmer, den Fahrkonfort mindernder Umstand. Er wird durch keine der bekannten Schaltungen, weder Kettenwechsler noch Nabenschaltung befriedigend gelöst.

Ferner mussen bei bekannten Elektrofahrradern die beiden Antriebsquellen, Elektroantrieb und Muskelkraft mit der gleichen Drehzahl antreiben. D.h. dass z.B. eine Erhöhung der Drehzahl des Elektroantriebs (zur Erhöhung der Fahrgeschwindigkeit) unweigerlich mit einer Erhöhung der Drehzahl des Muskelkraft-Antriebs verbunden ist. Im Falle eines Fahrrades mit elektrischem Hilfsantrieb bedeutet dies eine Erhöhung der Tretfrequenz des Fahrers. Alltags-Radfahrer fuhlen sich jedoch lediglich in einem sehr engen Bereich der Tretfrequenz wohl. Normalerwelse liegt dieser Bereich zwischen 50 und 60 Umdrehungen pro Minute. Naturlich kann dies in einem gewissen Bereich durch bekannte Fahrradschaltungen ausgeglichen werden (Kettenwechsler, Nabenschaltung). Dies bedeutet jedoch, dass der Fahrer standig die Fahrradschaltung bedienen muss.

Der vorliegenden Erfindung liegt die Idee zugrunde, die obengenannten Nachteile weitgehend zu eliminieren, indem ein sportliches Fahrrad mit Hilfsmotor geschaffen wird, welches in jedem Betriebszustand jeden zusätzlichen Einsatz der Muskelkraft des Fahrers in eine erhöhte Fahrgeschwindigkeit umsetzt, und dadurch ein sehr sportliches Fahrgefuhl vermittelt. Ferner soll dem Fahrer das manuelle Bedienen eines Kettenwechslers oder einer Nabenschaltung weitgehend abgenommen werden. Es soll ein Fahren mit beliebiger Geschwindigkeit bei gleichbleibender Tretfrequenz ermöglicht werden.
Die beiden Antriebsquellen sollen völlig unabhängig voneinander mit einer beliebigen Drehzahl antreiben können.

Erfindungsgemäss wird dies erreicht durch einen Hybrid-Antrieb mit den Merkmalen des Patentanspruches 1. Vorzugsweise wird hierbei ein direkt das Antriebsrad / die Antriebsrader treibender Elektromotor, ein sogenannter Radnabenmotor verwendet.

Die beiden Antriebsquellen, Elektromotor und Muskelkraft konnen bei der erfindungsgemassen Anordnung je mit beliebigen, völlig unterschiedlichen Drehzahlen antreiben. Der Elektromotor kann beispielsweise sehr hochtourig antreiben, während die Muskelkraft mit einer ganz niedrigen Drehzahl mittreibt (schnelles Fahren bei gemütlichem Treten) oder genau umgekehrt (schnelles, sportliches Fahren bei geringem Stromverbrauch). Immer wird die Leistung beider Antriebsquellen vollumfanglich in Fortbewegungsenergie und eine erhöhte Fahrgeschwindigkeit umgesetzt. Jede Erhöhung der Drehzahl einer der beiden Antriebsquellen hat eine Erhohung der Fahrgeschwindigkeit zur Folge, weil die Drehzahlen der beiden Antriebsquellen addiert, beziehungsweise uberlagert werden.

Im Falle eines Fahrrades mit Hilfsmotor erfolgt daher auf jede Erhohung der Tretleistung des Fahrers eine Erhohung der Fahrgeschwindigkeit. D.h. dass ein sportlicher Fahrer mit einem erfindungsgemässen Fahrrad beliebig schnell fahren kann. Es sind ihm keine einengenden Grenzen durch die Maximaldrehzahl des Elektromotors gesetzt.

Durch entsprechendes Regeln der Drehzahl des Elektromotores in Abhängigkeit der Tretfrequenz kann fur ein erfindungsgemässes Fahrzeug die Fahrgeschwindigkeit beliebig verändert werden, obwohl die Tretfrequenz des Fahrers konstant bleibt. Durch eine entsprechende Elektronik kann dies so geregelt werden, dass über einen breiten Bereich von verschiedenen Fahrzuständen die Tretfrequenz gleichbleibend gehalten wird und ein Bedienen einer Fahrradschaltung entfällt.

Durch eine beliebige Kupplungseinrichtung z.B. Klauenkupplung oder aus Nabenschaltungen bekannte Klinken kann der Muskelkraftantrieb wahlweise mit dem Stator oder dem Rotor des Elektromotors in Eingriff gebracht werden. Dadurch stehen dem Fahrer zwei ganz unterschiedliche Antriebsweisen, eine parallel treibende, die Drehmomente addierende, für langsame Geschwindigkeiten am Berg, sowie eine die Drehzahlen addierende für schnellere Fahrten auf ebener Strecke zur Verfügung.

Der erfindungsgemässe Antrieb findet in verschiedenen Bereichen Verwendung. Vorzugsweise wird er in Fahrrad-ähnlichen Fahrzeugen angewendet.
Am häufigsten werden dabei direkt treibende bürstenlose Gleichstrommotoren eingesetzt. Diese lassen sich besonders vorteilhaft bei den hier vorhandenen relativ niederen Drehzahlen einsetzen. Ebenso sind jedoch direkt treibende Motoren mit Kommutierung mittels Bürsten denkbar. Vorzugsweise wird in diesem Falle die Regelelektronik ausserhalb der Nabe, oder zumindest auf einem fest stehenden Teil innerhalb der Nabe untergebracht. Dadurch müssen lediglich zwei Kontaktringe zur Übertragung des Plus- und Minus-Pols angebracht werden.

Auf mehrspurigen, durch Muskelkraft und Elektromotor angetriebenen Hybridfahrzeugen kann der erfindungsgemasse Antrieb als Zwischenwelle im Antriebsstrang von der Tretkurbel bis zum Hinterrad untergebracht werden. Durch eine solche Anordnung können auch weniger drehmomentstarke Elektromotoren verwendet werden. wie herkömmliche, mechanisch kommutierte Gleichstrommotoren, wobei der Stator - meistens als Gehäuse ausgebildet - durch die Muskelkraft angetrieben wird. Am Abtrieb kann die sich von Muskelkraft und Elektroantrieb erzeugte Abtriebsdrehzahl abgenommen und mittels Ketten oder Zahnriementransmission auf das Antriebsrad übertragen werden.

Auf einem Fahrrad mit elektrischem Zusatzantrieb wird die gesamte Antriebseinheit vorzugsweise im Hinterrad untergebracht. Vorzugsweise werden hierbei der Stator des Elektromotors sowie die von der Muskelkraft angetriebenen Zahnkranze drehbar auf einer zentralen Welle gelagert. Der Rotor des Elektromotors wird als den Stator umschliessendes Gehäuse der Radnabe ausgebildet, welches mit handelsublichen Speichen mit der Felge verbunden wird. Innerhalb des als Gehäuse der Nabe ausgebildeten Rotors ist - ebenfalls drehbar auf der zentralen Welle gelagert - der Stator untergebracht. Das als Rotor dienende Gehause der Radnabe wird vorzugsweise - zur einfachen Montage der Einheit - zweiteilig ausgebildet. Zur Erhöhung des Fahrkomforts kann der Muskelkraft-Antrieb wahlweise mit dem Stator oder dem Rotor des Elektromotors kraftschlussig gekoppelt werden. Hierfür konnen verschiedenste Kupplungseinrichtungen, z.B. Klauenkupplungen aus Nabenschaltungen bekannte Klinkenkupplungen u.a. verwendet werden. Im dargestellten Ausführungsbeispiel wird eine konstruktiv sehr einfache Kupplung mittels Rastbolzen verwendet.
Der als Radnabe ausgebildete Rotor kann einseitig gelagert aufgebaut sein, oder als den Stator völlig umschliessendes Teil konstruiert werden, welches beidseitig des Stators mit je einer Lagerung abgestutzt wird. Die auf der durch Muskelkraft getriebenen Welle abgestützte Lagerung wird in diesem Falle sinnvollerweise als Freilauf ausgebildet.

Diese und weitere vorteilhafte Ausführungsformen gehen ferner aus den abhängigen Patentansprüchen hervor.
In der Zeichnung sind zwei Ausfuhrungsbeispiele des Erfindungsgegenstandes dargestellt und anhand der nachfolgenden Beschreibung erläutert. Es zeigt:
- Figur 1: einen vertikalen Achsialschnitt durch eine Antriebsnabe eines Fahrrades und
- Figur 2: einen achsialen Vertikalschnitt durch eine Antriebsnabe eines Rades eines Rollstuhles

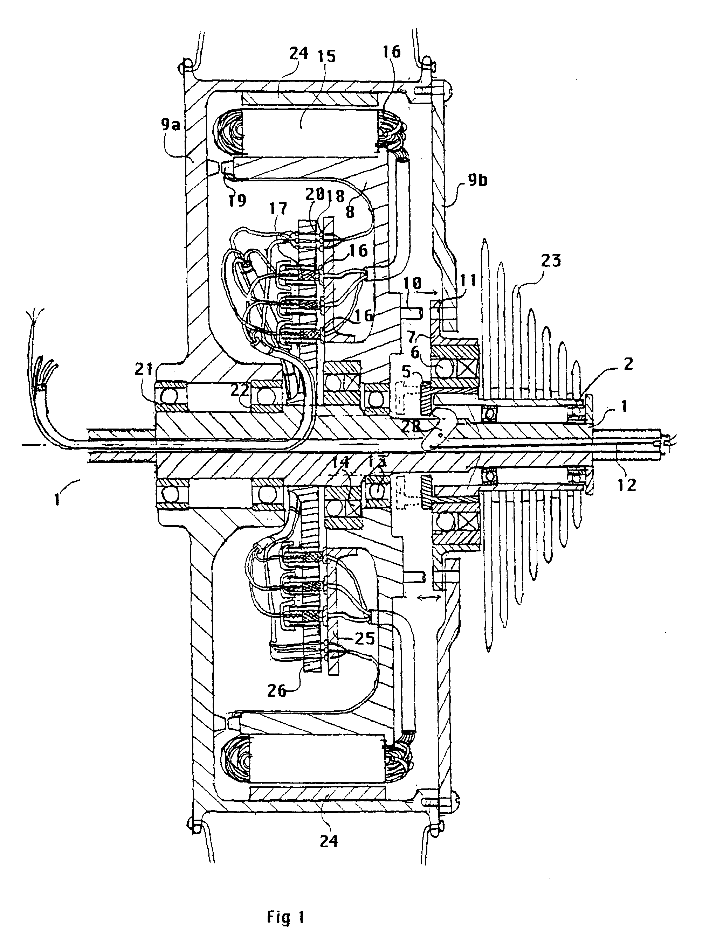

Das Ausführungsbeispiel gemass Figur 1 zeigt eine mogliche Anordnung des erfindungsgemassen Antriebs auf einem Fahrrad unter Verwendung eines bürsteniosen Gleichstrommotors und einer einseitigen Lagerung eines als Radnabe ausgebildeten Rotors.
Im dargestellten Beispiel ist ein Rotor 9 eines Elektromotores, welcher gegenüber einem Stator 8 mit einer ersten Drehzahl elektrisch angetrieben wird, als den Stator umschliessende Nabe eines Rades ausgebildet. Der Stator 8 des Elektromotors ist drehbar gelagert und kann mittels des anschliessend beschriebenen Mechanismus durch die Zahnkranze 23 eines Tretantriebes mit einer zweiten, beliebigen Drehzahl angetrieben werden. Am Rotor 9, d.h. an der Nabe des Rades ergibt sich eine Drehzahl, welche der Summe der ersten und der zweiten Drehzahl entspricht.

Auf einer zentralen Hohlachse 1 ist eine Hülse 2 mittels Kugellager 3 und 4 drehbar gelagert, welche mit den Zahnkranzen 23 des Tretantriebs kraftschlussig verbunden ist Über das eine Ende der Hülse 2 ist ein flanschförmiges Teil 5 gesteckt, welche mittels einer Verzahnung formschlussig mit der Hülse 2 verbunden ist, jedoch axial verschoben werden kann. Auf dem flanschförmigen Teil 5 ist mittels Kugellager und Freilauf 6 ein Flansch 7 drehbar gelagert. Durch einen Hebel 28, mit zugehörigen Bowdenzug 12, sowie einer in der Zeichnung nicht dargestellten Rückstellfeder kann der Flansch 7 mittels darin angebrachter Bohrungen wahlweise mit dem mit Bolzen 10 versehenen Stator 8 oder dem mit Bolzen 11 versehenen Rotor 9 in Eingriff gebracht werden. Auf diese Weise kann der Tretantrieb wahlweise mit dem Stator oder dem als Gehäuse der Nabe kraftschlüssig ausgebildeten Rotor 9 verbunden werden. Dadurch kann wahlweise eine Addition der Drehzahlen von Tretantrieb und Elektroantrieb oder der Drehmomente von Tretantrieb und Elektroantrieb bewirkt werden. Die wahlweise Kraftübertragung der Muskelkraft auf den Stator oder den Rotor des Elektromotors kann mit jeder beliebigen Kupplung bewirkt werden.
Der Stator 8 ist mittels Kugellager 13 und Freilauf 14 drehbar auf der zentralen Welle 1 gelagert. Der Freilauf 14 verhindert eine Ruckwartsdrehung des Stators, wenn nicht mitgetreten wird, oder der Tretantrieb mit dem Rotor gekoppelt ist.
Auf dem Stator sind die Statorbleche 15, sowie die Wicklungen angebracht, welche uber eine entsprechende Einrichtung, im dargestellten Fall uber Schleifringe 16, sowie Kohlebursten 17 mit Strom versorgt werden. Mittels Schleifringe 18 und Bürsten 20, oder ähnlicher Vorrichtungen, werden die Signale von den Sensoren 19 zur Erfassung der Rotorposition übertragen.

Die mittels der Sensorik 19 erfassten Daten bezüglich der Relativlage und -bewegung vom Stator zu Rotor werden einem elektronischen Regler zugeführt, der innerhalb oder ausserhalb dieser Antriebskonstruktion angeordnet sein kann.

Im dargestellten Ausführungsbeispiel ist der Rotor 9 als den Stator 8 umschliessendes Gehäuse der Nabe des Fahrrades ausgebildet, und mittels Kugellager 21 und 22 einseitig auf der dem Muskelkraft-Antrieb gegenüberliegenden Seite gelagert. Ein als Gehäuse ausgebildeter Rotor kann ebenso als den Stator ganz umschliessendes Bauteil konstruiert und beidseitig des Stator, mittels eines den Zahnkränzen 23 des Tretantriebs nahe gelegenen Lagers, welches auf der Hülse 2 gelagert ist, und zugleich als Freilauf ausgebildet ist, gelagert werden.
In diesem Falle braucht fur den Fahrzustand der Drehmomentaddition, d.h. wenn der Tretantrieb kraftschlussig direkt mit der Nabe (dem Rotor) gekoppelt sein soll, lediglich der Tretantrieb vom Stator 8 entkoppelt werden. Durch besagtes, als Freilauf ausgebildetes Lager wird das Moment des Tretantriebs auf den Rotor übertragen, während der Freilauf 14 das Reaktionsmoment des Stators aufnimmt und dessen Rückwärtsdrehung verhindert.

Der erfindungsgemässe Antrieb findet auch als Zusatzantrieb auf Rollstühlen eine sinnvolle Verwendung. Bisher werden auf Rollstühlen vor allem rein elektrische Antriebe verwendet, die meist über eine Handbedienung geregelt werden. Solche Antriebe sind für viele Behinderte, welche ihren Rollstuhl nicht mehr aus eigener Kraft antreiben können, eine grosse Hilfe. Zugleich fehlt ihnen dadurch jegliches tägliche Körpertraining, welches sehr gesundheitsförderlich wäre.
Rein durch die Muskelkraft angetriebene Rollstühle mit einem reifenförmigen Handlauf für den Antrieb sind eine sehr sinnvolle und einfache Lösung, überfordern jedoch oft kräftemässig die Behinderten.

Aus der Erfahrung heraus, dass körperliches Training für Behinderte Menschen besonders wichtig ist, wurden Rollstühle entwickelt, welche mittels Sensoren am Handlauf die durch den Fahrer eingebrachte Kraft erfassen, und durch einen in der Radnabe untergebrachten Elektromotor verstärken. Dies hat eine einer Servo-Lenkung vergleichbare Wirkung für den Antrieb des Rollstuhls.
Ungelöst bleibt dadurch jedoch das Problem, dass ein schnelleres Fortkommen als Schrittempo durch Antreiben am Handlauf kaum zu bewerkstelligen ist.

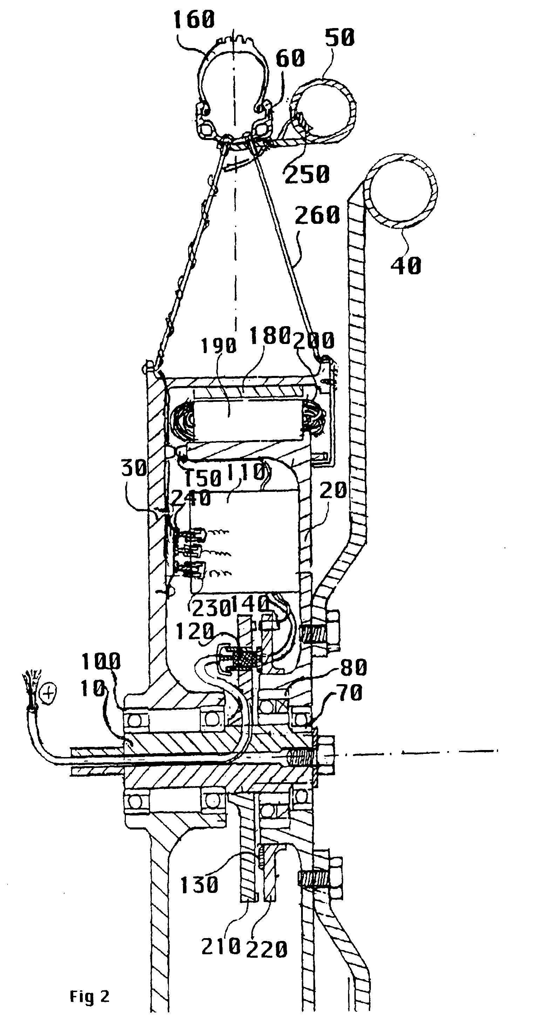

Durch den verwendeten erfindungsgemässen Hybrid-Antrieb an einem Rollstuhl können diese Probleme auf ganz neuartige Weise gelöst werden. In den Naben der beiden Räder werden vorzugsweise direkt treibende Elektromotoren untergebracht, deren drehbar gelagerter Stator durch Muskelkraft am reifenformigen Handlauf angetrieben werden kann. So überlagern sich die durch den Elektromotor erzeugte erste Drehzahl und die zweite durch den Fahrer mittels Handlauf auf den Stator übertragene zweite Drehzahl. Nachstehend wird auf die Figur 2 Bezug genommen. Am Rotor 30, weicher mittels Speichen 260, oder direkt mit der Felge 60 verbunden ist, ergibt sich eine dritte Drehzahl, welche der Summe der ersten und der zweiten Drehzahl entspricht. Es können also an der Felge mühelos hohe Abtriebsdrehzahlen erreicht werden, obwohl am ersten Handlauf 40 nur mit einer dem Schrittempo vergleichbaren Drehzahl angetrieben wird. Für Fahrten an Steigungen, wo ein grösseres Moment am Rad erforderlich ist, kann ein zweiter, reifenförmiger Handlauf 50 vorgesehen werden, welcher mit dem Rotor 30, d.h. also der Felge 60 in Wirkverbindung steht. Wird an diesem Handlauf 50 angetrieben, so ergibt sich keine Überlagerung der Drehzahlen, hingegen können die Drehmomente des Handantriebs und des ElektroAntriebs addiert werden.

Ein Rollstuhl kann so mit einem Antrieb versehen werden der je nach Anforderung oder Wunsch des Fahrers abwechselnd die am zweiten Handlauf 50 abgegebene Kraft verstärkt - für Fahrten in Steigungen oder Manövrieren - oder die am ersten Handlauf 40 abgegebene Drehzahl vervielfacht. Zum Wechsel der einen Betriebsart in die andere braucht lediglich am ersten inneren oder zweiten äusseren Handlauf 40, 50 angetrieben zu werden. Sinnvollerweise werden hierfür pro Rad zwei nah nebeneinander liegende Handläufe oder zwei Handläufe mit unterschiedlichem Durchmesser verwendet. Ebenso denkbar ist ein einzelner Handlauf pro Rad, welcher durch eine entsprechende Kupplungseinrichtung mit dem Stator des Elektromotors oder dem Rotor gekoppelt werden kann.

Eine bevorzugte Ausführung des Antriebs wird erreicht, indem Rotor 30 und Stator 20 des Elektromotors auf einer zentralen Achse 10 gelagert werden. Vorzugsweise werden Rotor 30 und Stator 20 je als schüsselförmiges Teil ausgebildet, wobei der Rotor 30 den Stator 20 umschliesst und als Nabe des Rades ausgebildet ist. Je nach Durchmesser des Rades und des Rotors 30 kann dieser Naben-förmige Rotor 30 mittels Speichen 260 mit der Felge 60 verbunden werden oder direkt in die Felge 60 übergehen. Die Ausführung mit zwei Handläufen 40, 50 pro Rad erweist sich als technisch sehr einfache und im Wechsel der beiden Betriebsweisen sehr bedienungsfreundliche Lösung. Zur Aufnahme des Reaktionsmomentes am Stator 20, wenn am zweiten äusseren, direkt mit der Felge 60 (dem Rotor 30) verbundenen Handlauf angetrieben wird, ist ein in rückwärtiger Drehrichtung sperrender Freilauf 80 vorgesehen. Die Unterbringung der Regelelektronik 110 auf dem Stator 20 ermöglicht eine Übertragung der elektrischen Energie mittels lediglich eines Schleifrings 130 zur Übertragung des Plus-Pols, während der Minus-Pol über den Rahmen übertragen wird. Zur Erfassung der am mit dem Stator 20 verbundenen ersten Handlauf 40 abgegebenen Leistung genügt ein erster Sensor 150 zur Erfassung der Relativdrehzahl zwischen Stator 20 und feststehender Welle 10.

Das Ausführungsbeispiel in Darstellung 2 zeigt eine mögliche Anordnung des Antriebs in der Nabe eines Rollstuhls. Im dargestellten Beispiel werden zwei Handläufe 40 und 50 verwendet, wovon der eine Handlauf 40 kraftschlüssig mit dem Stator 20 verbunden ist, der andere Handlauf 50 mit der Felge 60 des Rollstuhls (Rotor des Elektromotors).
Der Stator 20 und der Rotor 30 sind beide mittels Kugellager 70 und 80 bzw. 90 und 100 drehbar auf der zentralen Achse 101 gelagert. Für das eine Lager des Stators wird vorzugsweise ein Freilauf 80 verwendet, der eine Rückwärtsdrehung des Stators in den Betriebszuständen verhindert, wo nur am äusseren Handlauf 50 angetrieben wird.

Der als Gehäuse ausgebildete Rotor 30 ist im dargestellten Beispiel mittels der Speichen 170 mit der Felge 60 verbunden. Auf seiner Innenseite sind die Magnete 180 angeordnet. Zusammen mit den Statorblechen 190 und den Statorwicklungen 200, welche auf dem Stator 30 angebracht sind, bilden sie den Elektromotor, welcher die erste Drehzahl erzeugt.

Am inneren, zweiten Handlauf 40, der mit dem Stator 20 des Elektromotors verbunden ist, wird von Hand mit der zweiten Drehzahl angetrieben. Diese Drehzahl wird mittels des ersten Sensors 140 erfasst und ihr mittels der Regelelektronik 110 eine angepasste erste Drehzahl des Elektromotors zugefügt. Am Rotor 30 des Elektromotors, d.h. an der Felge des Rades ergibt sich eine dritte Drehzahl, welche der Summe der ersten und der zweiten Drehzahl entspricht.

Am äusseren, mit der Felge verbundenen Handlauf 50 wird mit der Drehzahl angetrieben, die der ersten Drehzahl des Elektromotors entspricht. In diesem Betriebszustand kann das am Handlauf 50 abgegebene Drehmoment durch den Elektromotor verstärkt werden. Zur Aufnahme des hierbei auftretenden Reaktionsmomentes am Stator 20, der in diesem Betriebszustand stillsteht, ist ein rückwärts sperrender Freilauf 80 vorgesehen. Zur Erfassung der am äusseren Handlauf abgegebenen Leistung ist ein zweiter Sensor 250 vorgesehen.
Im dargestellten Beispiel wird die Regelelektronik 110 auf dem Stator 20 angebracht. Sie wird über die ersten Kohlebürsten 120, sowie den ersten Schleifring 130 mit Strom versorgt. Der Minus-Pol wird über den Rahmen geführt.
Zur Aufnahme der Kohlebürsten 120, bzw. des Schleifringes 130, sowie des Sensors 140 ist je ein flanschförmiges Teil 210 und 220 vorgesehen.

Zur Erfassung der am ersten Handlauf 40 abgegebenen Leistung wird lediglich die Drehzahl des Stators 20 gegenüber der zentralen Achse 10 mittels des Sensors 140 erfasst. Mittels des Sensors 150 wird die Relativdrehzahl des Rotors gegenüber dem Stator 20, sowie die jeweilige Rotorposition erfasst.
Eine Regelung des Rollstuhles nur mittels der durch den Sensor erfassten Drehzahl des Rotors ist bereits ausreichend für einen sehr zweckmässigen Rollstuhl.

Wenn am zweiten, äusseren Handlauf 50 angetrieben wird, kann das Antriebsdrehmoment durch den Elektromotor verstärkt werden. Dafür ist ein zweiter Sensor 250 am äusseren Handlauf 50 vorgesehen, welcher die am äusseren Handlauf 50 durch den Fahrer abgegebene Leistung erfasst. Dadurch kann, vor allem für Steigungen, das am äusseren Handlauf 50 abgegebene Drehmoment durch den Elektromotor verstärkt werden. Hierfür ist jedoch eine Übertragung der Signale des zweiten Sensors 250 auf den mit dem Stator 20 mitrotierenden elektronischen Regler 110 erforderlich. Im dargestellten Beispiel wird dies mittels der zweiten Bürsten 230 sowie der zweiten Schleifringe 240 erreicht.

## Patentansprüche

1. Hybrid-Antrieb für ein radgetriebenes Fahrzeug mit einem Elektromotor mit Rotor (9, 30) und Stator (8, 20) als erste Antriebsquelle mit einer ersten Drehzahl und einem ersten Drehmoment, und mit einer zweiten Antriebsquelle mit einer zweiten Drehzahl und einem zweiten Drehmoment, **dadurch gekennzeichnet, dass** der Stator (8, 20) des Elektromotors drehbar auf einer Achse oder Welle des Antriebsstrangs zwischen zweiter Antriebsquelle und Antriebsrad, vorzugsweise auf einer Radachse (1, 10) angeordnet ist und mit der zweiten Antriebsquelle mechanisch gekoppelt oder Koppelbar ist, so dass der Stator (8, 20) durch die zweite Antriebsquelle getrieben ist, so dass dadurch der Rotor (9, 30) des Elektromotors eine Drehzahl aufweist, welche der Summe der ersten Drehzahl des ersten Antriebes und der zweiten Drehzahl des zweiten Antriebes entspricht.

2. Hybrid-Antrieb nach Anspruch 1, **dadurch gekennzeichnet, dass** alternativ die zweite Antriebsquelle wahlweise mit dem Stator (8, 20) oder mit dem Rotor (9, 30) koppelbar ist, so dass dadurch entweder die Drehzahlen oder die Drehmomente beider Antriebe sich summieren.

3. Hybrid-Antrieb nach Anspruch 1, **dadurch gekennzeichnet, dass** die zweite Antriebsquelle ein Muskelkraft-Antrieb ist mit Tretkurbel.

4. Hybrid-Antrieb nach Anspruch 1, **dadurch gekennzeichnet, dass** der Elektromotor ein Aussenläufermotor ist.

5. Hybrid-Antrieb nach Anspruch 4, **dadurch gekennzeichnet, dass** der Stator (8, 20) drehbar auf einer Achse (1, 10) eines Antriebsrades angeordnet ist und dass der Rotor (9, 30) Teil einer Radnabe ist.

6. Hybrid-Antrieb nach Anspruch 1, **dadurch gekennzeichnet, dass** der Elektromotor ein elektronisch kommutierter Elektromotor ist.

7. Hybrid-Antrieb nach einem der Ansprüche 1 bis 6, **dadurch gekennzeichnet, dass** zwischen Stator (8, 20) der ersten Antriebsquelle und der zweiten Antriebsquelle ein Freilauf (6, 80) geschaltet ist.

8. Hybrid-Antrieb nach einem oder mehreren der Ansprüche 1 bis 7, **dadurch gekennzeichnet, dass** zwischen der durch Muskelkraft angetriebenen Welle und dem mit der ersten Drehzahl angetriebenen Rotor (9, 30) des Elektromotors ein Freilauf (6, 80) zwischengeschaltet ist.

9. Verwendung eines Hybrid-Antriebes nach einem oder mehreren der Ansprüche 1 bis 7, an einem Fahrrad als Fahrzeug.

10. Verwendung eines Hybrid-Antriebes nach einem oder mehreren der Ansprüche 1 bis 8, an einem Rollstuhl als Fahrzeug, wobei in den zwei angetriebenen Rädern je ein Hybrid-Antrieb untergebracht ist.

11. Hybrid-Antrieb nach Anspruch 2, **dadurch gekennzeichnet, dass** auf der Achse eine Hülse (2) gelagert ist, auf der Zahnkränze (23) eines muskelgetriebenen Antriebes angeordnet sind, wobei diese Hülse (2) formschlüssig von einem ersten, achsial auf der Hülse (2) verschiebbaren Flansch (5) gefasst ist, während auf diesen ersten, verschiebbaren Flansch (5) ein zweiter Flansch (7) über Zwischenlagerung mittels einem Freilauf (6) so verschiebbar ist, dass dieser mittels Formschlussmitteln (10,11) alternativ entweder mit dem Stator (8) oder mit dem Rotor (9) des Elektromotors in Eingriff bringbar ist.

12. Hybrid-Antrieb nach Anspruch 1, **dadurch gekennzeichnet, dass** am Stator (8, 20) und am Rotor (9, 30) Sensoren (19, 140, 150) angeordnet sind, die die Relativbewegung beider Motorteile zueinander erfassen und dass das so ermittelte Signal einer Regelung zugeführt ist mittels der der Elektromotor regelbar ist.

## Claims

1. A hybrid drive for a wheel-driven vehicle with an electric motor with a rotor (9, 30) and stator (8, 20) as a first drive source with a first rotational speed and a first torque, and with a second drive source with a second rotational speed and a second torque, **characterised in that** the stator (8, 20) of the electric motor is rotatably arranged on an axle or shaft of the drive line between the second drive source and drive wheel, preferably on a wheel axle (1, 10) and is mechanically coupled or couplable to the second drive source so that the stator (8, 20) is driven by the second drive source so that by way of this the rotor (9, 30) of the electric motor has a rotational speed which corresponds to the sum of the first rotational speed of the first drive and of the second rotational speed of the second drive.

2. A hybrid drive according to claim 1, **characterised in that** alternatively the second drive source is selectively couplable to the stator (8, 20) or to the rotor (9, 30) so that by way of this either the rotational speeds or the torques of both drives sum.

3. A hybrid drive according to claim 1, **characterised in that** the second drive source is a muscle power drive with a pedal crank.

4. A hybrid drive according to claim 1, **characterised in that** the electric motor is an outer rotor type motor.

5. A hybrid drive according to claim 4, **characterised in that** the stator (8, 20) is rotatably arranged on an axle (1, 10) of a drive wheel and that the rotor (9, 30) is part of a wheel hub.

6. A hybrid drive according to claim 1, **characterised in that** the electric motor is an eletronically commutated electric motor.

7. A hybrid drive according to one of the claims 1 to 6, **characterised in that** between the stator (8, 20) of the first drive source and the second drive source there is arranged a free-wheel (6, 80).

8. A hybrid drive according to one or more of the claims 1 to 7, **characterised in that** between the shaft driven by muscle power and the rotor (9, 30), of the electric motor, driven with the first rotational speed there is interconnected a free-wheel (6, 80).

9. The use of a hybrid drive according to one or more of the claims 1 to 7, on a bicycle as a vehicle.

10. The use of a hybrid drive according one or more of the claims 1 to 8 on a wheelchair as a vehicle, wherein in the two driven wheels there is in each case accommodated a hybrid drive.

11. A hybrid drive according to claim 2, **characterised in that** on the axle there is mounted a bushing (2) on which there are arranged chain wheels (23) of a muscle driven drive, wherein this bushing (2) is held with a positive fit by a first flange (5) axially displaceable on the bushing (2), whilst on this first, displaceable flange (5) a second flange (7) via intermediate mounting by way of a free-wheel (6) is displaceable such that this second flange by way of positive fit means (10, 11) alternatively may either be brought into engagement with the stator (8) or with the rotor (9) of the electric motor.

12. A hybrid drive according to claim 1, **characterised in that** on the stator (8, 20) and on the rotor (9, 30) there are arranged sensors (19, 140, 150) which acquire the relative movement of the two motor parts to one another and that the thus evaluated signal is led to a control by way of which the electric motor may be controlled.

## Revendications

1. Système d'entraînement hybride pour un véhicule à propulsion par roues, comprenant un moteur électrique comportant un rotor (9, 30) et un stator (8, 20) en tant que première source d'entraînement présentant une première vitesse angulaire et un premier couple de rotation, et une seconde source d'entraînement présentant une seconde vitesse angulaire et un second couple de rotation, **caractérisé par le fait que** le stator (8, 20) du moteur électrique est monté à rotation sur un axe ou arbre du brin d'entraînement entre la seconde source d'entraînement et la roue menante, de préférence sur un essieu (1, 10) de roue, et est ou peut être accouplé mécaniquement à la seconde source d'entraînement, de façon telle que ledit stator (8, 20) soit entraîné par la seconde source d'entraînement, d'où il résulte que le rotor (9, 30) du moteur électrique présente une vitesse angulaire qui correspond à la somme de la première vitesse angulaire du premier entraînement, et de la seconde vitesse angulaire du second entraînement.

2. Système d'entraînement hybride selon la revendication 1, **caractérisé par le fait que** la seconde source d'entraînement peut être sélectivement accouplée, en variante, au stator (8, 20) ou au rotor (9, 30), d'où il résulte que soit les vitesses angulaires, soit les couples de rotation des deux entraînements s'additionnent.

3. Système d'entraînement hybride selon la revendication 1, **caractérisé par le fait que** la seconde source d'entraînement est un entraînement par force musculaire, muni d'une pédale.

4. Système d'entraînement hybride selon la revendication 1, **caractérisé par le fait que** le moteur électrique est un moteur à induit extérieur.

5. Système d'entraînement hybride selon la revendication 4, **caractérisé par le fait que** le stator (8, 20) est monté à rotation sur un essieu (1, 10) d'une roue menante ; et **par le fait que** le rotor (9, 30) fait partie intégrante d'un moyeu de roue.

6. Système d'entraînement hybride selon la revendication 1, **caractérisé par le fait que** le moteur électrique est un moteur électrique commuté électroniquement.

7. Système d'entraînement hybride selon l'une des revendications 1 à 6, **caractérisé par le fait qu'**un accouplement (6, 80) à roue libre est interposé entre le stator (8, 20) de la première source d'entraînement, et la seconde source d'entraînement.

8. Système d'entraînement hybride selon l'une ou plusieurs des revendications 1 à 7, **caractérisé par le fait qu'**un accouplement (6, 80) à roue libre est interposé entre l'arbre entraîné par une force musculaire, et le rotor (9, 30) du moteur électrique qui est entraîné à la première vitesse angulaire.

9. Utilisation d'un système d'entraînement hybride selon l'une ou plusieurs des revendications 1 à 7, sur une bicyclette matérialisant le véhicule.

10. Utilisation d'un système d'entraînement hybride selon l'une ou plusieurs des revendications 1 à 8, sur un fauteuil roulant matérialisant le véhicule, sachant qu'un système d'entraînement hybride respectif est intégré dans les deux roues menées.

11. Système d'entraînement hybride selon la revendication 2, **caractérisé par le fait qu'**une douille (2), sur laquelle se trouvent des couronnes dentées (23) d'un entraînement à propulsion musculaire, est montée sur l'axe, cette douille (2) étant emprisonnée, par concordance de formes, par une première collerette (5) pouvant coulisser axialement sur la douille (2), tandis qu'une seconde collerette (7) peut accomplir un coulissement sur cette première collerette coulissante (5), avec montage intermédiaire au moyen d'un accouplement (6) à roue libre, de telle sorte que ladite seconde collerette puisse être alternativement mise en prise, par des moyens (10, 11) de coopération par concordance de formes, avec le stator (8) ou avec le rotor (9) du moteur électrique.

12. Système d'entraînement hybride selon la revendication 1, **caractérisé par le fait que** des capteurs (19, 140, 150), disposés sur le stator (8, 20) et sur le rotor (9, 30), détectent le mouvement relatif des deux parties du moteur l'une par rapport à l'autre ; et **par le fait que** le signal, ainsi établi, est appliqué à une régulation au moyen de laquelle le moteur électrique peut être régulé.
